# EUROPEAN PATENT SPECIFICATION

(11) **EP 0 353 466 B1**
(45) Date of publication and mention of the grant of the patent: **03.11.1993**
(21) Application number: 89111999.2
(22) Date of filing: 30.06.1989
(51) Int. Cl.: B60N 3/04, A47G 27/02

(54) **Antistatic mat**
Antistatische Matte
Paillasson antistatique

(30) Priority: 02.07.1988 JP 165472/88; 28.08.1988 JP 213886/88; 08.10.1988 JP 254469/88; 08.10.1988 JP 254470/88
(43) Date of publication of application: 07.02.1990
(73) Proprietor: DAIWA CO., LTD., Hashima-gun Gifu Prefecture (JP)
(72) Inventor: Yamada, Kohei, Hashima-gun Gifu-prefecture 501-61 (JP)
(74) Representative: Bohnenberger, Johannes, Dr.

(56) References cited:
- EP-A- 0 311 930
- FR-A- 2 092 190
- US-A- 3 778 331
- US-A- 3 823 056
- US-A- 4 061 811

## Description

### BACKGROUND OF THE INVENTION

This invention relates to an antistatic mat for vehicles, and more particularly to an antistatic mat equipped with an electric discharge function against generation of static electricity for effectively preventing adhesion of dust and dirt thereon and, secondly, inconveniences caused by an electric shock.

US 4,061,811 discloses an antistatic pile carpet comprising a primary backing, a plurality of rows of pile yarn and a backing layer of a latex having carbon fibers dispersed therein, the carbon fibers having specific dimensions and being placed between and along the rows of pile yarn and being arranged parallel to the rows.

An antistatic mat as disclosed in JP-A-61-110632 is designed to prevent the mat from being spoiled due to attraction of dust and dirt or rubbish caused by generation of static electricity and for preventing the user from electric shocks.

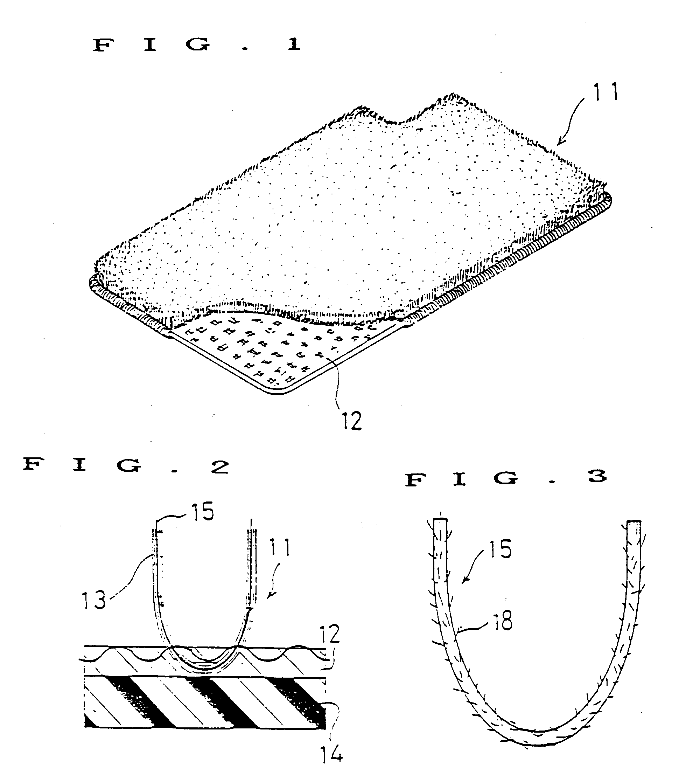

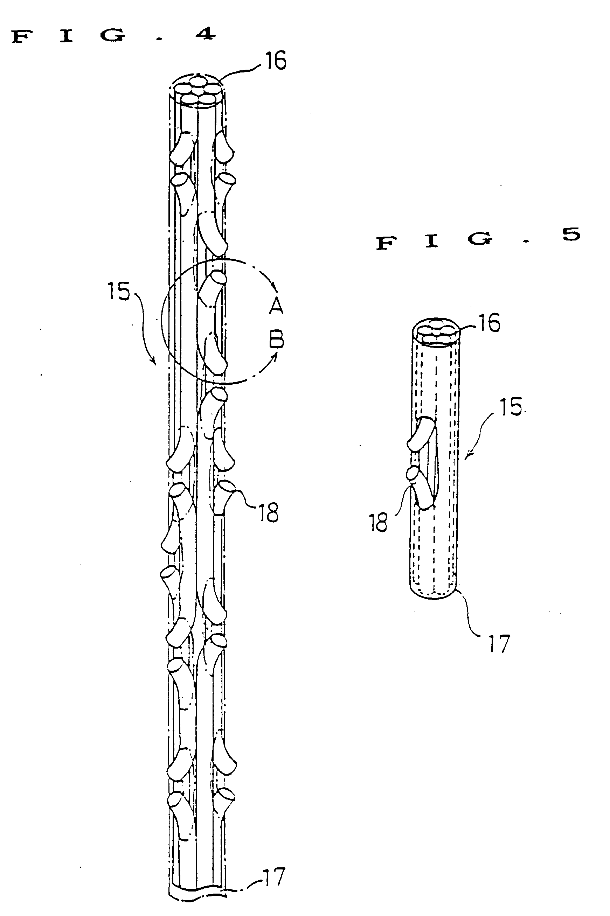

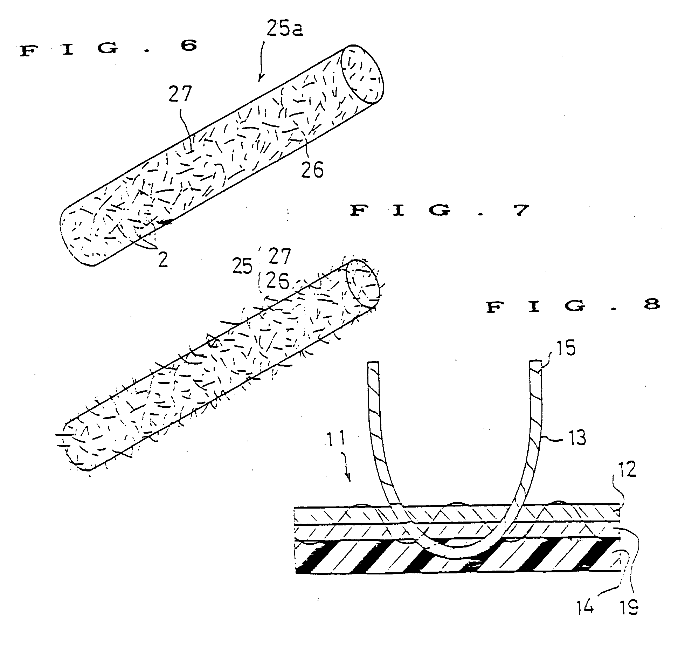

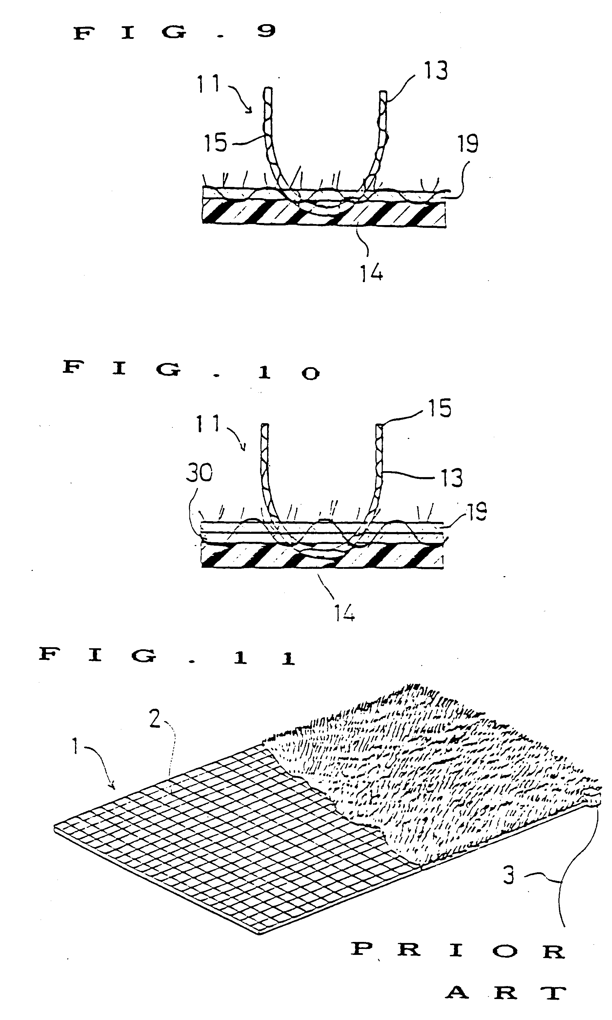

The antistatic mat according to the prior art is shown in Fig. 11 and includes a conductive base cloth 2 partially including a conductive thread therein and a connecting cable 3 for electrically connecting one end of the antistatic mat 1 with a vehicle body. According to the antistatic mat 1 of this prior art, another end of the connecting cable 3 is connected to the vehicle body for earthing static electricity to the vehicle body caused by friction between shoes and the bottom of the trousers at the time of getting into or out of the vehicle or during driving of the vehicle.

In the antistatic mat 1 according to the prior art as above, however, the generated static electricity is earthed to the vehicle body by the cable 3 connected to one end portion of the mat. Therefore, when the mat becomes depositioned due to getting into and out of the vehicle the connecting cable becomes disconnected from the vehicle body so that the earthing action will be frequently disabled.

Furthermore, the connected cable 3 as above requires a mounting portion where earthing is capable in the vehicle body. In addition to that, for earthing static electricity in the electrified body, earthing means such as an earth belt should be provided at the vehicle body, since the body of the vehicle does not contact the ground surface directly.

The problem of the present invention is to provide an antistatic mat provided with electric discharging function against generation of static electricity for effectively preventing adhesion of dust and dirt to the vehicle mat and for eleminating the danger of electric shocks.

In accordance with the present invention an antistatic mat is provided as defined in the claims. The antistatic mat comprises piles including conductive compound fibers containing conductive components. The conductive compound fibers also comprise non-conductive components for protecting the conductive components.

An antistatic mat according to a preferred embodiment includes conductive compound fibers wound around non-conductive fibers forming a pile in a manner that each conductive fiber is wound around the periphery of each non-conductive fiber to form a spiral shape.

Preferably, the mat includes conductive compound fibers mixed to the bundle of the non-conductive fibers forming the pile.

In a further embodiment, the mat includes: a core member formed by focusing or bundeling fibrous conductive compound fibers provided in the center of the fiber; and a sheath member composed of non-conductive synthetic resin surrounding and covering the core member. The conductive components disposed centrally and consituting the core member are partially cut away at the end portion of the conductive components and protrude from one surface of the fiber.

In the antistatic mat preferably the conductive compound fibers are formed by mixing fibrous conductive components with non-conductive components composed of non-conductive synthetic resin, and the conductive components are protruding from the surface of the fiber.

The antistatic mat preferably includes piles including conductive components protruding from one surface of the synthetic resin and an conductive layer composed of conductive material and provided between the pile and a base cloth such that the conductive layer makes contact with the conductive compound fibers.

A first feature is to provide an antistatic mat which enables atmospheric discharge of static electricity caused by friction generated by shoes and the bottom of trousers by means of the conductive components protruding from the surface of the synthetic resin fibers of the conductive compound fibers.

A second feature is to provide an antistatic mat which enables atmospheric discharge of static electricity generated by friction by shoes and the bottom of the trousers by means of the conductive compound fibers which are wound around in a spiral shape non-conductive fibers forming a pile. Furthermore, by forming spiral conductive compound fibers wound around non-conductive fibers, the conductive compound fiber is reinforced by the non-conductive fiber.

A third feature is to provide an antistatic mat which enables atmospheric discharge of static electricity generated because of friction between shoes and the bottom of the trousers and the mat by means of the conductive compound fibers mixed into the focused bundle of the non-conductive fibers forming the pile. The conductive compound fibers mixed with and protected by the focused bundle of non-conductive fibers are protected against damage by frequent friction between shoes or the bottom of the trousers and the mat.

In the antistatic mat the conductive compound fibers included in the pile can be made by focusing or bundling fibrous electroconductive components forming the core member disposed centrally in the fiber in a manner such that all conductive compound fibers are in contact with each other, the conductive components being partially cut away so that at least one conductive component becomes protruding over or at the surface of the sheath member made of synthetic resin. Static electricity generated by friction or other causes is transmitted to other conductive components forming the core member by means of the conductive compound fibers protruding from the surface of fabric, providing a conductivity and electric discharge function.

The antistatic mat is free from being damaged at the surface and shows excellent features regarding physical constants such as strength, since the conductive components are mixed with non-conductive synthetic resin in the conductive compound fibers. Conductivity and electric discharge function are obtained by the conductive components protruding from the surface of the fibers.

In the antistatic mat, the conductive layer made of conductive material and provided between the pile and the base cloth performs atmospheric discharge of static electricity caused by friction generated between shoes and trousers and the mat when getting into or out of the vehicle or during driving or so. In one embodiment of the invention, static electricity is atmospherically discharged by the conductive compound fibers protruding from the surface of the fibers included in the pile of the base cloth provided in the manner that the base cloth contacts with the conductive layer. Other objects and aspects of the invention will become apparent from the following description of preferred embodiments together with the drawings in which
Fig. 1 is a perspective view showing an antistatic mat according to an embodiment of the present invention;
Fig. 2 is an enlarged cross-sectional view showing main sections of the antistatic mat;
Fig. 3 is a perspective view of conductive compound fibers included in the pile of the antistatic mat according to an embodiment of the present invention;
Fig. 4 is a partially enlarged perspective view of the conductive compound fibers;
Fig. 5 is an enlarged perspective view showing main sections enclosed within line A-B;
Fig. 6 is an enlarged perspective view showing another embodiment of the conductive compound fiber;
Fig. 7 is an enlarged perspection of the fiber shown in Fig. 6, in which the outer surface of the fiber is melted;
Fig. 8 is an enlarged cross-sectional view showing another embodiment of the present invention;
Fig. 9 is an enlarged cross-sectional view of the further embodiment of the present invention showing main sections of the static mat;
Fig. 10 is an enlarged cross-sectional view of the antistatic mat according to still a further embodiment of the present invention showing main sections of the static mat; and
Fig. 11 is a perspective view of an antistatic mat according to prior art.

At the outset, the invention is described in its broadest overall aspects with a more detailed description as follows.

Referring to Figs. 1 and 2, the antistatic mat 11 according to the present invention includes a base cloth 12, a pile 13 forming a predetermined volume on the base cloth 12, and a backing up material 14 for fixing the pile 13 to the base cloth 12.

The base cloth 12 may be made by cutting a fabric such as non-woven fabric, a mesh, a nylon fabric or the like to a predetermined shape. In this embodiment, a non-woven fabric is used as a base cloth 12. A plurality of hairs of pile 13 are provided on the base cloth 12 in the manner that each end of a pile hair penetrates through and protudes from the rear surface of the base cloth 12. An example of such pile 13 is made by focusing and bundling a plurality of non-conductive fibers such as nylon fibers so that each pile hair has a predetermined diameter. In this pile 13 as mentioned herein-above are included conductive compound fibers 15, which is one of the gists of the present invention, such that each conductive compound fiber 15 is wound around each non-conductive fiber to form a spiral or helical shape or such that conductive compound fibers are mixed with the bundle of the non-conductive fibers.

The conductive compound fibers 15 manufactured as explained above are provide for both, conductivity and electric discharge function, while attaining a predetermined strength of the fiber 15.

In this embodiment, the conductive compound fiber 15 is composed of a core member 16 and a sheath member 17, as shown in Figs. 3 through 5.

The core member 16 is formed by focusing fibrous conductive components. For example, a fibrous conductive component 18 may be formed by mixing conductive powder such as powdery carbon, simple substance of metal and that like, oxidized metal such as tin oxide and zinc oxide, or a metallic compound such as copper sulfide and zinc sulfide with thermoplastic polymer such as polyethylene, polypropylene, polystyrene, polybutadiene, polyisoprene, nylon-6, nylon-66, polyethylene terephthalate, polybutylene terephthalate adapted for spinning.

The compounding ratio of conductive powder and thermoplastic polymer depends on the kinds of conductive powder used, however, most preferably is a ratio of 3:1 by weight. If conductive powder is added excessively, the conductive powder can not be effectively mixed with polymer, and therefore it is required to determine appropriate mixing amount depending on the case. A plurality of conductive components 18 (preferably 3 to 5 in number) formed in the manner as explained above, is focused or bundeled to form the core member 16. The core member 16 is disposed centrally such that the sheath member 17 covers the core member 16.

Any fiber forming non-conductive synthetic resin is suitable for the sheath member 17. Preferably, the fiber is made of a polyamide such as nylon-6, nylon-66, or nylon-12, polyester acrylic polymer such as polyethylene phthalate or polybutylene terephthalate or polyolefine such as polyurethane and polypropylene. The fiber having a core and sheath structure is made in the manner that the non-conducting resin surrounds and coats the core member 16 formed by focusing electroconductive components 18. Coating of the core member 16 by the sheath member 17 may be made based on any conventional method. In this embodiment, the fiber is manufactured by melting a non-conductive resin forming the sheath member 17, soaking the core member 16 in the melted fluid of non-conductive resin, impregnating the conductive components forming the core member 16 as well as the surface of the core member 16 with resin, and cooling and solidifying the non-conductive resin to form the coating layer of the non-conductive resin. From the aforegoing, it becomes clear that the present invention additionally refers to a method for manufacturing an antistatic mat and/or fibers for manufacturing such a mat.

The conductive compound fiber 15 having a core and sheath structure is partially cut away such that one part of the core member 16 disposed centrally within the fiber is partially protruding from the surface of the fiber. According to a preferred embodiment of the inventive method, a spark cutter is used for cutting fibers. Spark cutting is performed in the condition that the fabric is moved at the speed of 5m/min. - 10m/min. and simultaneously exerting a constant tension thereon and igniting under a voltage of 10 Kv - 20 Kv. The depth of cutting depends on the thickness of the sheath member 17. However, at least one of the conductive components 18 forming the core member 17 disposed in the center of the fiber should be cut. As a result, it is preferrable to form substantially thin sheath member 17 covering the core member 16. However, forming a very thin sheath member 17 around the core member leads to deterioration in strength and streching characteristic of the fiber. Because of the reason as mentiond hereinabove, the sheath member 17 should be formed having adequate thickness so that fiber provides sufficient strenght and streching characteristics.

In the fiber on which the cutting procedure is finished, one part of the conductive components 18 forming the core member 16, especially the top end and/or the peripheral portion of the conductive components 18 disposed outwardly, projects from the surface of the fiber, thus presenting raised appearance all over the fibers. In addition to cutting of the conductive components of the core member 16, the sheath member 17 includes partially scooped out portions extending centrally from the projecting portions of the conductive components 18 . According to this embodiment, the outer surface of the sheath member 17 , that is, the outer surface of non-conductive resin forming the sheath member 17 is removed by means of solvent. As a result, the fiber in total is made substantially thinner than that at the time when cutting of the fiber is performed. The thinner, the fiber, the larger parts of conductive components are the protruding from the sheath member, whereby both conductivity and electric discharge function are improved. Removal of the sheath member 17 by means of a solvent may be performed by a conventional method using a solvent. In the present invention, the sheath member is removed by passing the cutted fibers in an atmosphere of the solvent.

Another example of the preferrable conductive compound fiber is shown in Fig. 6.

The conductive compound fibers 25 in this example is made by mixing non-conductive components 26 composed of non-conductive synthetic resin with fibrous conductive components 27 and by melt spinning of the above mixture. On the surface of the fiber is projectingly provided at least one of the conductive components 27 . The conductive components 25 are made by mixing non-conductive components 26 composed of melt spinable non-conductive synthetic resin such as nylon, polyester, polypropylene, or polyethelene with a conductive component 27 composed of fibrous carbon, a simple substance of metal, an oxidized metal such as tin oxide and zinc oxide, or a metallic compound such as copper sulfide and zinc sulfide and are formed in substantially thinner denier than that conductive compound fiber 28 and cutted in predetermined lengths. The fiber is finished by performing melt spinning in a mixing ratio such that the fibrous conductive components 27 accupy not more than 10 % of the total weight of the fibers, and melting the outer surface of the conductive compound fibers 25 .

The conductive compound fiber 25 manufactured as above presents an appearance that a plurality of fibrous conductive components 27 is raised by projecting of conductive compound fibers 27 from the surface.

For producing the conductive compound fibers 25 as above, a chip made of melt spinnable non-conductive synthetic resin such as nylon, polyester, polypropylene, or polyethylene is prepared.

On the other hand, the conductive components 27 are prepared being composed of fibrous carbon, a simple substance of metal or the like, oxidized metal such as tin oxide or zinc oxide, or a metallic compound such as copper sulfide or zinc sulfide and formed into substantially thinner denier than the conductive compound fiber 27 . If the conductive component 27 is excessively thick, the produced conductive compound fibers 25 presents an inferior appearance and less preferrable physical constants.

The conductive components 27 should be cutted in lengths equal to or less than 5 mm, considering diffusion at the time of mixing, preferable appearance of the conductive components 25 and stable physical constants and conductivity.

Subsequently, the synthetic resin as non-conductive component 26 is mixed with the conductive components 26 so that the conductive components occupy not more than 10 % of the non-conductive components. The mixing ratio as above is adapted for attaining good appearance of the produced conductive compound fibers 25 and preferrable characteristics similar to those of the non-conductive components 26 , for example, physical constants, as well as enhancing stability in the spinning process.

Subsequently, mixing of the above non-conductive components 26 with the conductive components 27 and spinning the mixture (a primary process) is performed.

One of the well-known spinning methods as above is the melt spinning method. According to this method, the non-conductive components 26 to which the conductive components 27 are mixed are melted by applying heat, extruded from small slots for spinning, and drafted upon solidification by cooling so that each fiber possesses physical constants. In the prosecution of this melt spinning, it is preferrable that the melting point of the conductive components 27 is higher than that of the synthetic resin forming non-conductive components 26 preferably at least by 100°.

An other example of a well-known spinning method is the extrude spinning method. According to this extrude spinning method, the electroconductive component 27 mixed with the conductive components 27 is heated until the temperature of the non-conductive components 26 arrives at the softening point, which is lower than the melting point of the resin, to extrude the mixture from the slots, when the thermal decomposition of synthetic resin forming the non-conductive component 26 is starting from the melting point.

An example of still an other spinning method is the wet spinning method. According to this method, the synthetic resin (as a conductive components) is dissolved in a solvent to obtain a spinning fluid and the spinning fluid is extruded as a plurality of filaments through slots into a solid fication-bath for solidifying the fluid. The filaments produced as above are drafted and dried by applying heat.

As shown in Fig. 2, in each spinned fiber 25a (spinned according to one of the spinning methods explained hereinabove) the conductive components 27 are partially exposed on the surface thereof and the conductive components 27 are wound around and make contact with each other, so that the resulting fibers become totally provided with conductivity. The fiber 25a spinned as explained above has a low mixing ratio of the conductive components 27 , whereby the resulting fiber shows similar physical constants, for example, the strength as a fiber solely composed of the non-conductive components 26 . The above spinned fibers 25a however, has a relatively low conductivity, since the portion where the conductive components are exposed is small.

For enhancing conductivity of the fiber 25a as above, the following process (a secondary process) is performed.

By melting only non-conductive components 26 at the surface of each spinned fiber 25a made according to one of the above-mentioned spinning methods to obtain slightly thinner fibers 25a , the conductive components 27 are made partially protruding from the surface of the conductive fiber 25 .

An example of the method of this secondary process is to prepare a solvent which dissolves the synthetic resin forming the non-conductive components 26 but which is unable to dissolve the conductive fiber composed of conductive components, and to pass the spinned fiber 25a in an atmosphere of constant density of the solvent. Another example of this secondary process is to pass the spinned fiber 25a through a solution including the solvent.

By the secondary process as explained above, the exposed portion of the conductive components 27 at the surface is increased at the surface and conductivity is greatly improved, although the production process is simple and production costs are low. Furthermore, by the secondary process damages of the spinned fiber 25a and crack formation thereon are both eliminated. Therefore, the conductive component fibers 25a made by adopting the secondary process show almost the same physical constants, for example, strength etc. as that of the fiber before undergoing this process.

The antistatic mat 11 according to the present invention is made by providing pile 13 including a conductive compound fiber 15 having a conductivity and an electric discharge function, as shown in Figs. 2-5 with the base cloth 12 in which the rear surface is reinforced by the backing material 14 made of synthetic resin such as vinyl chloride resin. The antistatic mat 11 having a structure as above enables to eliminate static electricity generated by friction caused by shoes through the conductive compound fibers 15 included in the pile 13 .

Hereinunder a further embodiment of the antistatic mat is described wherein conductivity and electric discharge function are further improved by providing a conductive layer.

Referring to Fig. 8, a conductive layer 19 is made by protruding the above-mentioned conductive material such as carbon fiber from the surface of the conductive layer 19 composed of conductive material for the purpose of atmospheric discharge of the static electricity.

An example of such conductive layer 19 is disclosed in the publication of Published Unexamined Japanese Patent Application No. 62-15639. The conductive layer 19 as above is composed of 3-15 % by weight of short hair carbon fiber, 20-70 % by weight of short hair fiber of synthetic resin, and remaining weight % of wood pulp, preferably paper having properties of half-value period equal to or less than 5 minutes and triboelectrified voltage equal to or less than 40 V. The paper used in this embodiment is made by mixing 5 % by weight of 1d x 6 mm short hair carbon fiber produced from acrylonitrile polymeric fiber made according to a conventional method, 35 % by weight of 1d x 6 mm short hair polyethelene terephthalate fiber wood pulp, and 15 % by weight of a binder by cutting the above mixture by means of a beating machine for obtaining a finer and homogeneous mixture and produced by adopting wet paper forming method. The conductive material composed of carbon fiber protrudes irregularly from the surface of the conductive layer 19 perpendicularly or slantingly. By protruding the top ends of conductive material composed of carbon fibers by not less than 50 hairs/cm² from the surface of the conductive layer 19 , anti-static characteristics are sufficiently achieved.

The above-mentioned material is not limited to the conductive layer 19 , and various materials which are produced at any process for forming an antistatic mat are useful.

Referring to Fig. 8, the method for producing the antistatic mat includes applying backing up material composed of thermoplastic resin in the sol condition. In this embodiment, vinyl chloride is applied onto a metal form (not shown) capable of heating and cooling. Subsequently, the metal form (not shown) is heated from the bottom surface thereof to change the backing up material 14 to semi-gel condition. Carbon material such as powdery, granular, or short fibrous carbon material and conductive material such as conductive ceramics and metals are spread or laid on the backing material 14 in the semi-gel condition in the manner that the backing up material contacts with the above conductive material. A plurality of compound fibers such as carbon fibers, conductive ceramic fibers, and metallic fibers are added to and bundled together with a plurality of nylon fibers 15 to form piles 13 so that each hair of pile 13 has a predetermined thickness by twisting a plurality of hairs of pile each having a predetermined thickness together with a plurality of hair of nylon fibers. The resulting pile 13 is provided to the base cloth 12 such that each hair of pile 13 having a predetermined thickness penetrates through the rear surface of the base cloth 12. The base cloth 12 is placed in a manner that the connected end of each hair of pile 13 is arranged within the conductive material for enabling contact between the conductive compound fiber 15 and conductive material.

The backing up material 14 in the sol condition, as mentioned hereinabove permeates within the conductive material. By directly heating and cooling the metal form (not shown) from the bottom surface thereof, the backing material 14 for producing the antistatic mat according to the present invention is changed into rubber like gel condition for producing the antistatic mat in which the conductive layer 19 is formed between the pile layer 13 and the backing up material 14 .

By providing of the conductive layer 19 as above within the antistatic mat 11 , conductivity and electric discharge function are greatly improved.

Another embodiment is shown in Fig. 9, in which the conductive layer 19 forms the base cloth. This embodiment in which the conductive layer 19 is exposed at the surface greatly improves electric discharge function.

Still another embodiment is shown in Fig. 10 in which a reinforcing sheet made of knitted or woven fabric, or non-woven fabric is adhered to and piled on one side surface of the conductive layer 19 . The antistatic mat structured as above according to this embodiment enables to prevent occurence of any injury to the human body and damage to the product caused by friction generated when the mat becomes in contact with other objects or touched by hand during the manufacturing of mats 1 .

The antistatic mat according to the invention enables atmospheric discharge of static electricity generated by friction between shoes and the bottom of the trousers and any further part by means of the conductive components protruding from the surface made of synthetic resin of the conductive compound fibers. In the mat structured as above, atmospheric discharge of static electricity would not be influenced by deposition of the mat while static electricity is effectively and savely eliminated. As a result, the mat as above does not need any attachement or accessory, such as a connecting cable or earthing belt for eliminating static electricity and the mat itself becomes available as a simple means to eliminate static electricity.

The antistatic mat according to the invention (claim 2) enables atmospheric discharge of static electricity caused by friction generated by shoes and the bottom of the trousers by means of the conductive compound fibers wound, in a spiral shape, together with and around non-conductive compound fibers forming piles. By winding conductive compound fibers together with and around non-conductive fibers in the manner that the conductive compound fiber have a spiral or helical shape, the conductive compound fibers become reinforced with non-conductive compound fibers.

The antistatic mat-structure as above, is free from danger of damages and abrasion of conductive compound components, and the durability of the conductivity and therefore the electric discharge function are both extended.

As a result, the antistatic mat according to the invention (claim 3) enables atmospherical discharge of static electricity caused by friction by means of conductive compound fibers mixed into a focused bundle of non-conductive fibers forming piles. According to the antistatic mat as above in which the conductive compound fibers are mixed into and protected from the bundle of non-conducted compound fibers, the conductive compound fibers are prevented from coming off and protected from abrasion frequently occuring between the mat and the shoes or the bottom of the trousers.

Therefore, damages or abrasion of the conductive components negatively effecting the conductivity and electric discharge function are eliminated, whereby duration in which conductivity an electric discharge function are maintained is extended.

In the antistatic mat according to the invention (claim 4), each conductive compound fiber included in the pile is making contact with each other by focusing the fibrous electroconductive components forming a core member disposed centrally within the fiber, while the conductive components are partially cut away and protrude from the fiber surface of a sheath member composed of non-conductive synthetic resin. Accordingly, the static electricity caused by friction is carried by conductive components protruding from the surface and transmitted to other conductive components forming the core member, being conductive and having an electric discharge function.

Therefore, duration in which conductively and electric discharge function are maintained is extended.

The antistatic mat according to the invention (claim 5) in which the conductive compound fibers included in the pile are formed by mixing conductive compound fibers into or with non-conductive synthetic resin eliminates danger of damages of the surface and expresses excellent physical constants, for example, strength. Furthermore, conductivity and electric discharge function are obtained by the conductive components protruding from the fiber surface.

Because of the explained structure, even if the conductive compound fibers are partially worned out, conductivity does not become deteriorated and the duration in which conductivity and discharge function are maintained is prolonged.

The antistatic mat according to the invention (claim 6) enables atmospheric discharge of static electricity caused by friction generated between shoes and the bottom of the trousers at the time of getting into and out of the vehicle and during driving by means of conductive layer made of conductive material and provided between pile and backing up material, and therefore static electricity atmospherically discharged by conductive layer is further discharged atmospherically by means of conductive components protruding from the surface of the conductive compound fibers included in the pile of the base cloth provided in contact with the conductive layer.

According to the structure as above, static electricity is effectively eliminated.

## Claims

1. An antistatic mat comprising at least a primary backing (12, 14, 19, 30), and protruding from the surface of said primary backing, piles (13) including conductive compound fibers (15, 25) each of which having conductive components (18, 27)
characterized in that said conductive compound fibers (15, 25) comprise non-conductive components (17, 26) for protecting said conductive components and said conductive components are conductive fibers (15, 18, 27) protruding from the surface of said non-conductive components (17, 26).

2. An antistatic mat as claimed in claim 1, characterized in that each conductive fiber (15) is wound together with and around a non-conductive fiber for forming said pile (13) such that said conductive compound fiber has a spiral or helical shape.

3. An antistatic mat as claimed in one of the claims 1 or 2, characterized in that said conductive fibers (15) are mixed into a focused bundle of non-conductive fibers for forming said pile (13).

4. An antistatic mat as claimed in one of claims 1, 2 or 3, characterized by comprising:
a core member (16) made of focused or bundled fibrous conductive components disposed centrally within a fiber; and a sheath member (17) composed of non-conductive synthetic resin and covering said core member (16) in a manner that said sheath member (17) surrounds and covers said core member (16);
wherein said conductive components (16) forming said core member provided centrally within the fiber are partially cut away and the top end of the cutted conductive component (16) is protruding from the surface of the fiber.

5. An antistatic mat as claimed in one of claims 1 to 4, characterized in that said conductive compound fiber (16) is made by mixing said fibrous conductive components with non-conductive synthetic resin, and one of said conductive components (18) is protruding from the surface of said fiber.

6. An antistatic mat according to one of claims 1 to 5, characterized by comprising a pile (13) layer including conductive compound fibers (15) partially protruding from a surface of a synthetic resin; and a conductive layer (19) composed of conductive material and provided between pile (13) and a backing up material (14) such that said conductive layer (19) contacts with said conductive compound fibers (15).

## Patentansprüche

1. Antistatische Matte, die folgendes aufweist: mindestens einen Erstträger (12, 14, 19, 30) und von der Oberfläche des Erstträgers vorspringende Florfäden (13), die leitfähige Verbundfasern (15, 25) aufweisen, die jeweils leitfähige Bestandteile (18, 27) haben,
dadurch gekennzeichnet, daß die leitfähigen Verbundfasern (15, 25) nichtleitfähige Bestandteile (17, 26) zum Schutz der leitfähigen Bestandteile aufweisen und die leitfähigen Bestandteile leitfähige Fasern (15, 18, 27) sind, die von der Oberfläche der nichtleitfähigen Bestandteile (17, 26) vorspringen.

2. Antistatische Matte nach Anspruch 1, dadurch gekennzeichnet, daß jede leitfähige Faser (15) gemeinsam mit einer nichtleitfähigen Fasern und um eine solche herum gewickelt ist, um den Florfaden (13) zu bilden, so daß die leitfähige Verbundfaser eine spiral- oder wendelförmige Gestalt hat.

3. Antistatische Matte nach einem der Ansprüche 1 oder 2, dadurch gekennzeichnet, daß die leitfähigen Fasern (15) in ein zusammengefaßtes Bündel von nichtleitfähigen Fasern eingemischt sind, um den Florfaden (13) zu bilden.

4. Antistatische Matte nach einem der Ansprüche 1, 2 oder 3, dadurch gekennzeichnet, daß sie folgendes aufweist:
ein Kernelement (16) aus zusammengefaßten oder gebündelten faserigen leitfähigen Bestandteilen, die zentral in einer Faser angeordnet sind; und ein Mantelelement (17), das aus nichtleitfähigem Kunstharz besteht und das Kernelement (16) auf eine Weise bedeckt, daß das Mantelelement (17) das Kernelement (16) umgibt und bedeckt;
wobei die leitfähigen Bestandteile (16), die das zentral in der Faser vorgesehene Kernelement bilden, teilweise abgeschnitten sind und das obere Ende des abgeschnittenen leitfähigen Bestandteils (16) von der Oberfläche der Faser vorspringt.

5. Antistatische Matte nach einem der Ansprüche 1-4, dadurch gekennzeichnet, daß die leitfähige Verbundfaser (16) hergestellt ist durch Vermischen der faserigen leitfähigen Bestandteile mit nichtleitfähigem Kunstharz und einer der leitfähigen Bestandteile (17) von der Oberfläche der Faser vorspringt.

6. Antistatische Matte nach einem der Ansprüche 1-5, dadurch gekennzeichnet, daß sie folgendes aufweist: eine Flor(13)-schicht, die leitfähige Verbundfasern (15) aufweist, die von einer Oberfläche eines Kunstharzes teilweise vorspringen; und eine leitfähige Schicht (19), die aus leitfähigem Material besteht und zwischen dem Flor (13) und einem Trägermaterial (14) so vorgesehen ist, daß die leitfähige Schicht (19) die leitfähigen Verbundfasern (15) berührt.

## Revendications

1. Tapis antistatique comprenant au moins un premier dossier (12, 14, 19, 30) et, saillant de la surface de ce premier dossier, un velours (13) comportant des fibres composées conductrices (15, 25) ayant chacune des constituants conducteurs (18, 27), caractérisé par le fait que les fibres composées conductrices (15, 25) comprennent des constituants non conducteurs (17, 26) pour la protection des constituants conducteurs et les constituants conducteurs sont des fibres conductrices (15, 18, 27) saillant de la surface des constituants non conducteurs (17, 26).

2. Tapis antistatique selon la revendication 1, caractérisé par le fait que chaque fibre conductrice (15) est enroulée avec et autour d'une fibre non conductrice pour la formation du velours (13) de façon que la fibre composée conductrice ait une forme en spirale ou en hélice.

3. Tapis antistatique selon l'une des revendications 1 et 2, caractérisé par le fait que les fibres conductrices (15) sont, pour la formation du velours (13), mélangées dans un faisceau focalisé de fibres non conductrices.

4. Tapis antistatique selon l'une des revendications 1, 2 et 3, caractérisé par le fait qu'il comprend une âme (16) faite de constituants conducteurs fibreux focalisés ou mis en faisceau placés au centre d'une fibre, et une gaine (17) composée de résine synthétique non conductrice et couvrant l'âme (16) de façon à entourer et couvrir celle-ci, les constituants conducteurs (16) formant l'âme prévue au centre de la fibre étant partiellement coupés, et l'extrémité supérieure du constituant conducteur coupé (16) saillant de la surface de la fibre.

5. Tapis antistatique selon l'une des revendications 1 à 4, caractérisé par le fait que la fibre composée conductrice (16) est faite par mélange des constituants conducteurs fibreux avec de la résine synthétique non conductrice, et un des constituants conducteurs (18) saille de la surface de la fibre.

6. Tapis antistatique selon l'une des revendications 1 à 5, caractérisé par le fait qu'il comprend une couche de velours (13) comportant des fibres composées conductrices (15) saillant partiellement d'une surface d'une résine synthétique, et une couche conductrice (19) composée de matière conductrice et prévue entre le velours (13) et une matière de support (14) de façon à être en contact avec les fibres composées conductrices (15).
